# FASCICULE DE BREVET EUROPEEN

(11) **EP 2 118 397 B1**
(45) Date de publication et mention de la délivrance du brevet: **20.04.2011**
(21) Numéro de dépôt: 08702572.2
(22) Date de dépôt: 05.02.2008
(51) Int. Cl.: E04F 10/06

(54) **CAPTEUR DOMOTIQUE COMPRENANT UN ACCELEROMETRE, PROCEDE DE SA CONFIGURATION ET OUTIL DE REGLAGE DE MISE EN OEUVRE DUDIT PROCEDE**
HAUSAUTOMATISIERUNGSSENSOR MIT EINEM BESCHLEUNIGUNGSMESSER, VERFAHREN ZUR KONFIGURATION DESSELBEN UND EINSTELLWERKZEUG ZUR DURCHFÜHRUNG DES VERFAHRENS
HOME-AUTOMATION SENSOR COMPRISING AN ACCELEROMETER, METHOD OF CONFIGURING SAME AND ADJUSTING TOOL FOR IMPLEMENTING SAID METHOD

(30) Priorité: 08.02.2007 FR 0700898
(43) Date de publication de la demande: 18.11.2009
(73) Titulaire: Somfy SAS, 74300 Cluses (FR)
(72) Inventeur: GREHANT, Bernard, F-74300 Nancy-sur-cluses (FR); ROUSSEAU, Fabien, F-74300 Cluses (FR); GERINIERE, Pierre, F-74300 Cluses (FR)
(74) Mandataire: Bugnion Genève
(86) Numéro de dépôt international: PCT/IB2008/050414
(87) Numéro de publication internationale: WO 2008/096315

(56) Documents cités:
- EP-A- 1 659 256
- EP-A- 1 752 597
- EP-A1- 1 077 378
- WO-A-02/04960
- WO-A-02/073888
- DE-U1- 20 000 682

## Description

L'invention se rapporte à un capteur autonome et communiquant sans fil, destiné à être disposé sur plusieurs types de produits dans un bâtiment, pour contribuer principalement à la sécurité desdits produits, des personnes ou des biens, ou pour contribuer au bon fonctionnement du bâtiment (ventilation). Les produits du bâtiment concernés sont notamment des produits mobiles de fermeture (fenêtres, portes et portails, volets roulants, clapets de ventilation) pour lesquels le capteur est susceptible de détecter un état ouvert ou fermé, une tentative d'ouverture. Ces produits mobiles peuvent être automatisés, auquel cas le capteur contribue à la détection d'obstacles imprévus lors de la manoeuvre automatique.

Les produits du bâtiment peuvent être des stores de terrasse : le capteur doit alors détecter d'éventuelles rafales de vent. Les produits concernés sont aussi des produits fixes, tels des vitrages. Le capteur est alors susceptible de détecter un bris de vitre.

La communication sans fil est assurée par radio-fréquences.

Dans l'état de la technique, il existe des capteurs différents répondant aux différents types de produits, voire même des capteurs différents pour un même type de produit. DE 2000068201, WO 02/04960 A1, EP1659256 A2, EP107378A1, WO 02/073888 A1 et EP 1752597A1 montrent tous des produits pertinents.

Ces différences se traduisent nécessairement par un coût élevé pour chaque type de capteur, tandis que l'usage d'un capteur polyvalent permettrait une réduction très significative par l'effet des quantités et de la réduction du nombre de références.

Le but de l'invention est de fournir un procédé de configuration d'un capteur permettant de remédier aux inconvénients identifiés précédemment et d'améliorer les procédés de configuration connus de l'art antérieur. En particulier, l'invention propose un procédé de configuration permettant de configurer un capteur domotique en fonction de l'utilisation à laquelle il est destiné. Le but de l'invention est aussi de fournir un capteur apte à être configuré de la sorte.

Le procédé de configuration selon l'invention est défini par la revendication 1.

Différents modes d'exécution du procédé de configuration sont définis par les revendications dépendantes 2 à 12.

Le capteur domotique selon l'invention est défini par la revendication 13.

Un mode de réalisation du capteur domotique est défini par la revendication dépendante 14.

L'outil de réglage selon l'invention est défini par la revendication 15.

Le dessin annexé illustre, à titre d'exemple, deux modes d'exécution d'un procédé de configuration selon l'invention, un mode de réalisation d'un capteur domotique selon l'invention et un mode de réalisation d'un outil de réglage selon l'invention.
La figure 1 décrit un capteur selon l'invention.
La figure 2 décrit une installation utilisant des capteurs selon l'invention.
Les figures 3A et 3B décrivent l'utilisation d'un capteur selon l'invention dans le cas d'un volet roulant.
Les figures 4A et 4B décrivent l'utilisation d'un capteur selon l'invention dans le cas d'une porte de garage basculante.
Les figures 5A et 5B décrivent l'utilisation d'un capteur selon l'invention dans le cas d'une porte ou d'une fenêtre battante.
Les figures 6A et 6B décrivent l'utilisation d'un capteur selon l'invention dans le cas d'un store de terrasse.
La figure 7 décrit un premier mode d'exécution du procédé de fonctionnement d'un capteur selon l'invention.
La figure 8 décrit un mode particulier d'intégration mécanique des composants d'un capteur selon l'invention.
La figure 9 décrit un système comprenant un outil de réglage selon l'invention et un capteur selon l'invention.
La figure 10 décrit un deuxième mode d'exécution du procédé de fonctionnement d'un capteur selon l'invention.

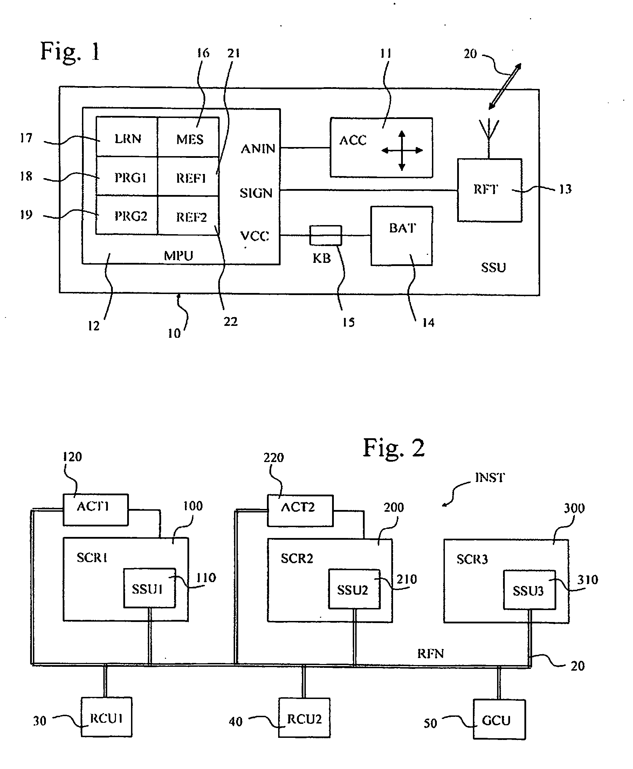

La figure 1 décrit un capteur 10 selon l'invention, désigné par SSU. Il comprend un accéléromètre 11 multi-axes, par exemple un accéléromètre trois-axes, désigné par ACC, des moyens matériels comprenant notamment une unité logique de traitement 12, désignée par MPU, et des mémoires 16, 17, 18, 19, un transmetteur 13, désigné par RFT, communiquant par exemple de manière unidirectionnelle par radiofréquences sur un réseau domotique 20 représenté par un double trait. La communication peut être de type bidirectionnel. L'accéléromètre ACC est raccordé à une entrée analogique ANIN de l'unité logique de traitement MPU, tandis que le transmetteur RFT est raccordé à une sortie de signal SIGN de l'unité logique de traitement. Ces liaisons multi-conducteurs assurent également l'alimentation des deux éléments, sous contrôle de l'unité logique de traitement MPU. Alternativement, les circuits d'alimentation sont séparés.

Une pile 14, désignée par BAT, alimente en énergie électrique les différents éléments du capteur, et en particulier l'unité logique de traitement MPU sur une entrée d'alimentation VCC. Le raccordement de la pile BAT à l'unité logique de traitement MPU se fait dès qu'un moyen de déconnexion 15, désigné par KB, est retiré. Ce moyen de déconnexion KB est par exemple constitué d'une feuille de film isolant séparant deux lames flexibles conductrices et dont le retrait permet la connexion lors de l'installation du capteur. Ainsi est évitée la décharge de la pile BAT lors d'un stockage avant installation.

Alternativement, la pile est constituée d'un convertisseur photo-voltaïque avec condensateur ou accumulateur. Dans une variante de réalisation, dans lequel le capteur comprend à la fois un boîtier actif et un support passif, le moyen de déconnexion est inhibé par une action mécanique résultant de la mise en place du boîtier sur le support.

L'unité logique de traitement MPU contient une première mémoire 16 dans laquelle sont logés les résultats de mesure MES provenant de l'accéléromètre. Il s'agit de mesures d'accélération, vitesse, position, et/ou fréquence vibratoire, ces résultats de mesure étant soit directement fournis par l'accéléromètre ACC, soit obtenus par intégration temporelle et analyse fréquentielle. Une deuxième mémoire 17 contient un programme d'apprentissage LRN. Une troisième mémoire 18 contient un premier programme exécutable PRG1. Une quatrième mémoire 19 contient un deuxième programme exécutable PRG2. Les différents programmes font partie de moyens logiciels.

Selon que le capteur SSU est disposé sur un produit d'un premier type ou d'un deuxième type, il devra exécuter le premier ou le deuxième programme exécutable.

Le capteur SSU comprend une cinquième mémoire contenant des premières données REF1 relatives à la caractérisation de produits du premier type, et une sixième mémoire contenant des deuxièmes données REF2 relatives à la caractérisation de produits du deuxième type.

Préférentiellement, le capteur est susceptible de convenir à un nombre de types de produits plus élevé, et le nombre de données de caractérisation ainsi que le nombre de programmes exécutables est alors adapté (par exemple égal) au nombre de types de produits.

Ainsi, le capteur selon l'invention comprend un moyen d'enregistrement de signaux délivrés par l'accéléromètre, un moyen d'analyse de l'enregistrement et un moyen de détermination du type du produit du bâtiment grâce au résultat de l'étape d'analyse

La figure 2 décrit une installation INST utilisant des capteurs selon l'invention. L'installation comprend un premier produit du bâtiment ou écran 100, désigné par SCR1. Ce produit est mobile de type volet roulant, motorisé par un premier actionneur 120, désigné par ACT1. Un premier capteur de sécurité 110, désigné par SSU1, est disposé sur le premier écran SCR1. L'installation comprend un deuxième produit du bâtiment ou écran 200, désigné par SCR2. Ce produit est mobile de type porte de garage basculante, motorisée par un deuxième actionneur 220, désigné par ACT2. Un deuxième capteur de sécurité 210, désigné par SSU2, est disposé sur le deuxième écran SCR2. L'installation comprend un troisième produit du bâtiment ou écran 300, désigné par SCR3. Ce produit est mobile de type porte battante, non motorisée. Un troisième capteur de sécurité 310, désigné par SSU3, est disposé sur le troisième écran SCR3.

Une première unité de commande à distance 30, désignée par RCU1, une deuxième unité de commande à distance 40, désignée par RCU2, et une unité de surveillance générale 50, désignée par GCU peuvent émettre des ordres de commande vers les actionneurs et recevoir des informations de la part des capteurs de sécurité à l'aide du réseau domotique 20, désigné par RFN. Alternativement, les ordres de commande et les informations provenant des capteurs de sécurité sont acheminées selon des protocoles (et/ou des fréquences porteuses) différents.

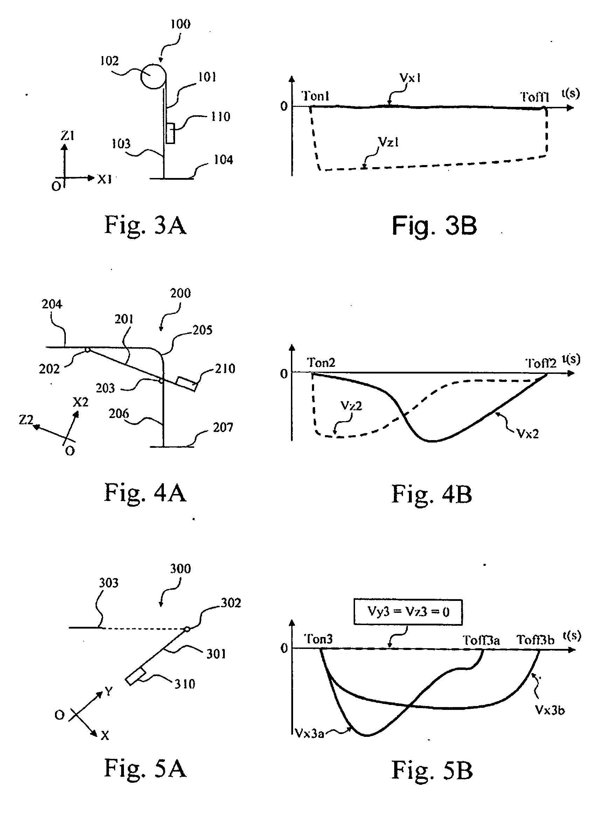

Dans les figures 3 à 6, on suppose que l'accéléromètre ne tient pas compte des effets du champ de gravitation.

Les figures 3A et 3B décrivent l'utilisation du capteur dans le cas du premier écran 100, de type volet roulant. Sur la figure 3A, le volet est représenté partiellement fermé, pendant une phase de fermeture. Le premier capteur de sécurité 110 est disposé dans une partie inférieure 101 du tablier du volet roulant, préférentiellement sur la lame finale. Une partie supérieure 102 du tablier est encore enroulée. Dans sa descente, le tablier est guidé par une coulisse 103. Un premier seuil 104 peut servir de butée mécanique. On a représenté par deux axes OX1 et OZ1 deux directions perpendiculaires de mesure de l'accéléromètre contenu dans le premier capteur de sécurité 110. Ce repère est lié au capteur. La figure 3B représente très schématiquement sur un diagramme temporel les vitesses issues des mesures de l'accéléromètre selon ces deux axes, respectivement Vx1 et Vz1, entre un premier instant Ton1 d'alimentation de l'actionneur le volet étant totalement ouvert et un deuxième instant Toff1 de fin d'alimentation lorsque le volet est complètement fermé. La vitesse Vx1 fluctue autour de zéro, selon le jeu de guidage dans la coulisse. La vitesse Vz1 est négative. Si le moteur de l'actionneur tourne à vitesse constante, le module de Vz1 diminue légèrement au fur et à mesure que diminue le rayon d'enroulement. Pour un volet de faible épaisseur, la vitesse Vz1 est sensiblement constante sur une grande partie de la course.

Si l'accéléromètre possède un troisième axe OY1, perpendiculaire aux précédents, la vitesse mesurée selon cet axe est sensiblement nulle.

Les figures 4A et 4B décrivent l'utilisation du capteur dans le cas du deuxième écran 200, de type porte de garage basculante. Sur la figure 4A, la porte est représentée partiellement fermée, pendant une phase de fermeture. Le deuxième capteur de sécurité 210 est disposé dans la partie inférieure d'un panneau rigide 201. Ce dernier est guidé par une roulette supérieure 202 et une roulette inférieure 203 sur un rail de guidage comprenant une partie horizontale 204, une partie courbe 205 et une partie verticale 206. Les axes des roulettes sont fixes par rapport au panneau rigide. Un deuxième seuil 207 peut servir de butée mécanique. Comme dans le cas précédent, on a représenté par deux axes OX2 et OZ2 deux directions perpendiculaires de mesure de l'accéléromètre contenu dans le deuxième capteur de sécurité 210. Ce repère est lié au capteur. La figure 4B représente très schématiquement sur un diagramme temporel les vitesses issues des mesures de l'accéléromètre selon ces deux axes, respectivement Vx2 et Vz2, entre un premier instant Ton2 d'alimentation de l'actionneur la porte étant totalement ouverte et un deuxième instant Toff2 de fin d'alimentation lorsque la porte est complètement fermée. Le premier mouvement de la porte est essentiellement horizontal (Vz2 négatif élevé, Vx2 faible), puis de rotation (Vz2 faible, Vx2 négatif élevé).

Si l'accéléromètre possède un troisième axe OY2, perpendiculaire aux précédents, la vitesse mesurée selon cet axe est sensiblement nulle.

Les figures 5A et 5B décrivent l'utilisation du capteur dans le cas du troisième écran 300, de type porte battante ou fenêtre battante. Sur la figure 5A, la porte est vue de haut. Un panneau battant 301 est raccordé à un bâti 303 par un gond 302. Le troisième capteur de sécurité 310 est monté à une extrémité du panneau battant, opposée à celle raccordée au gond. Si on prend le même sens de montage du capteur que dans les cas précédents, les axes situés dans le plan de la figure sont désignés par OX3 et OY3. Les vitesses respectives Vx3 et Vy3 correspondent alors aux vitesses tangentielle et radiale de l'extrémité du panneau battant.

Lors d'un mouvement manuel de fermeture démarrant à l'instant Ton3a et se terminant à l'instant Toff3a, la vitesse Vx3a est normalement négative, dépendant de l'action manuelle, et la vitesse Vy3 est rigoureusement nulle. Il en est de même pour la vitesse Vz3 si l'accéléromètre possède un troisième axe OZ3, perpendiculaire aux précédents.

Pour une nouvelle action manuelle plus lente, ramenée fictivement au même instant de départ, la vitesse Vx3b présente un profil différent et se termine à un instant Toff3b supérieur au précédent.

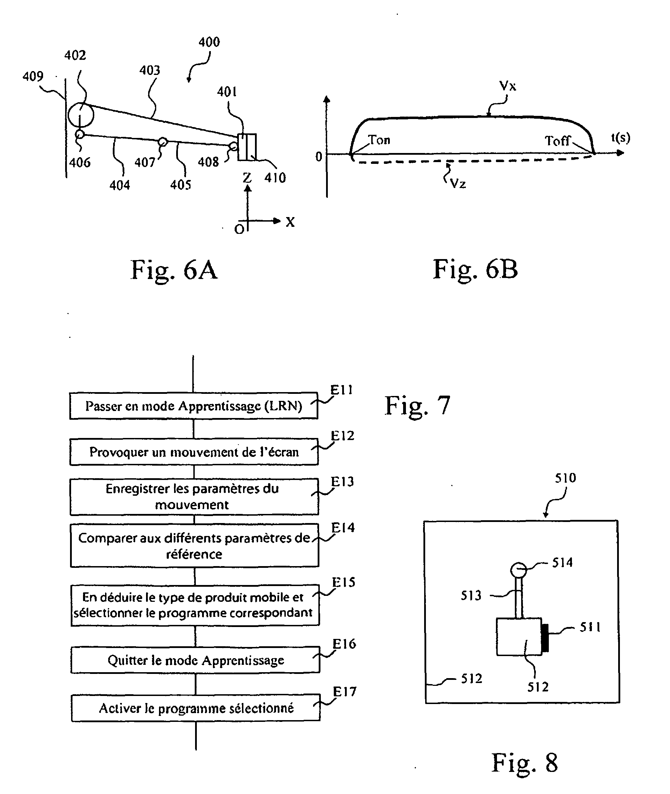

Les figures 6A et 6B décrivent à titre de dernier exemple l'utilisation du capteur dans le cas d'un autre écran de type store de terrasse 400. Comme indiqué sur la figure 6A, celui-ci comprend une extrémité mobile 401, raccordée à une toile tendue 403 enroulable sur un tambour motorisé 402. Un premier bras articulé 404 et un deuxième bras articulé 405 sont raccordés entre eux par une articulation commune 407 et, respectivement, au tambour motorisé par une articulation fixe 406 et à l'extrémité mobile par une articulation mobile 408. Le raccordement du tube motorisé 402 au bâti 409 n'est pas représenté.

La cinématique est telle que l'extrémité mobile se déplace parallèlement à elle-même quand le store est en cours de mouvement.

Comme dans les cas précédents, on a représenté par deux axes OX et OZ deux directions perpendiculaires de mesure de l'accéléromètre contenu dans le quatrième capteur de sécurité 410. Ce repère est lié au capteur. La figure 6B représente très schématiquement sur un diagramme temporel les vitesses issues des mesures de l'accéléromètre selon ces deux axes, respectivement Vx et Vz, entre un premier instant Ton d'alimentation de l'actionneur le store étant totalement replié et un deuxième instant Toff de fin d'alimentation lorsque le store est complètement déployé. Le mouvement de l'extrémité libre 401 est essentiellement horizontal et très régulier (Vx positif élevé, sensiblement constant), avec une descente progressive (Vz négatif, faible et sensiblement constant). Les vitesses Vx et Vz sont sensiblement constantes sur une grande partie de la course.

Si l'accéléromètre possède un troisième axe OY, perpendiculaire aux précédents, la vitesse mesurée selon cet axe est sensiblement nulle.

Il ressort de ces différentes observations que bien que les différents capteurs enregistrent des données très différentes selon le type de produit, il est possible de concevoir un modèle unique de capteur susceptible de reconnaître le type de produit sur lequel il a été fixé. Ceci permet ensuite de sélectionner un programme de fonctionnement du capteur assurant des fonctionnalités de détection spécifiques au type de produit qu'il équipe.

La figure 7 décrit le procédé de fonctionnement du capteur selon un premier mode de fonctionnement de l'invention.

Dans une première étape E11, on passe en mode d'apprentissage avec activation du programme d'apprentissage LRN. De très nombreuses variantes permettent de provoquer le passage en mode d'apprentissage : il est provoqué par exemple par la première mise sous tension de l'unité logique de traitement MPU, lorsqu'on enlève le moyen de déconnexion KB. Comme vu plus haut, cette première mise sous tension peut résulter de la mise en place du boîtier du capteur sur son support.

Il peut aussi s'agir de la réception d'une commande radio particulière, si le transmetteur est bidirectionnel. Il peut enfin s'agir d'un signal constitué par une séquence particulière de chocs, provoqués sur le boîtier du capteur et détectés par l'accéléromètre.

Lors d'une deuxième étape E12, applicable aux produits mobiles, on provoque le mouvement de l'écran, à l'aide de l'actionneur correspondant si le produit est motorisé, ou manuellement. Le mouvement est préférentiellement une fermeture ou une ouverture complète.

Lors d'une troisième étape E13, qui se déroule pendant l'étape précédente, on recueille et enregistre les paramètres de mouvement MES. Les paramètres mesurés sont aussi bien l'accélération, la vitesse, la position, la fréquence vibratoire selon les différents axes de l'accéléromètre. Cette étape a lieu également pour les produits fixes, tels des vitrages de façade.

Lors d'une quatrième étape E14, à l'issue des deux précédentes, ou par exemple après une durée prédéterminée décomptée à partir du passage en mode d'apprentissage, les paramètres mesurés MES sont comparés à des paramètres de référence REF1, REF2, ... REFN. Compte tenu des exemples donnés, la comparaison peut être simple et porter par exemple sur des seuils de vitesse. De manière plus complexe, des algorithmes d'intercorrélation peuvent être utilisés.

Le résultat des comparaisons permet, dans une cinquième étape E15, de déterminer sans ambiguïté le type de produit mobile, et donc de sélectionner le programme correspondant PRG1, PRG2, ... PRGN. En cas d'ambiguïté, un message radio peut être envoyé par le transmetteur vers l'unité de surveillance générale afin que l'installateur soit averti du problème.

Lors d'une sixième étape, on quitte le mode apprentissage, et on active le programme sélectionné lors d'une septième étape E17.

Par exemple, si aucun mouvement n'a été détecté pendant les phases précédentes, le capteur a déterminé qu'il est placé sur une vitre et il active un programme « vitrage » comportant un contrôle fréquentiel basé sur la reconnaissance de fréquences spécifiques de bris de vitre.

Si un mouvement de rotation pure a été détecté, le capteur active un programme « porte battante » : détection de fermeture (signature du choc battant-dormant), détection ultérieure de tout mouvement à partir de cette position de repos. Le programme « porte battante » peut aussi comporter un module fréquentiel de détection de vibrations spécifiques d'une tentative de perçage de canon de serrure.

Si la combinaison régulière de deux mouvements de translation a été détectée, le capteur active un programme « protection store » dans lequel on reconnaît la signature des oscillations provoquées par des rafales de vent.

Si un simple mouvement vertical a été détecté, le capteur active un programme « volet roulant », permettant la détection d'obstacles lors de la fermeture. L'analyse de la signature d'arrêt en butée permet de reconnaître si le capteur a été monté sur une simple lame finale, ou s'il a été monté sur une barre palpeuse, ce qui permet de différencier encore les programmes de traitement et d'obtenir une grande finesse de détection des obstacles, ou de détection par le capteur de situations particulières, comme l'arrivée en position « ajours » d'un volet roulant à lames ajourées.

Le capteur de sécurité selon l'invention se prête donc à de multiples applications. Grâce à l'invention, un même capteur polyvalent, comprenant un accéléromètre multi-axes peut être « spécialisé » par apprentissage pour assurer différentes fonctions. La plus grande capacité mémoire nécessaire est très largement compensée par les avantages d'une référence unique de capteur.

Si on tient compte de l'ensemble du champ de gravitation agissant sur l'accéléromètre, on recueille une information sur l'orientation des axes par rapport à la verticale du lieu, ce qui donne une plus grande liberté quant aux contraintes d'installation du capteur sur l'écran, puisque la cinquième étape E15 du procédé permet également de déterminer l'orientation du capteur.

La figure 8 décrit un mode particulier d'intégration mécanique des composants du capteur, garantissant que l'accéléromètre contenu dans celui-ci présente toujours un axe OZ orienté selon la verticale. De ce fait, les programmes d'apprentissage et de traitement peuvent être simplifiés, et il est plus facile pour le concepteur de prévoir ou d'analyser l'évolution des composantes horizontales et verticale de vitesse liées au déplacement du produit mobile. Dans un capteur 510 selon ce mode particulier d'intégration mécanique, l'accéléromètre 511 (ACC de la figure 1) est disposé contre une masse 512, suspendue par un barreau 513 à une rotule 514 permettant le mouvement pendulaire de la masse par rapport au boîtier 515 du capteur.

Dans ce mode particulier d'intégration mécanique, comme dans les précédents, l'accéléromètre mesure les mouvements sur au moins deux axes.

Par accéléromètre, il faut entendre dans la présente demande tout type de transducteur permettant de transformer une grandeur physique de déplacement, force, vitesse, pression ou vibration en une grandeur électrique.

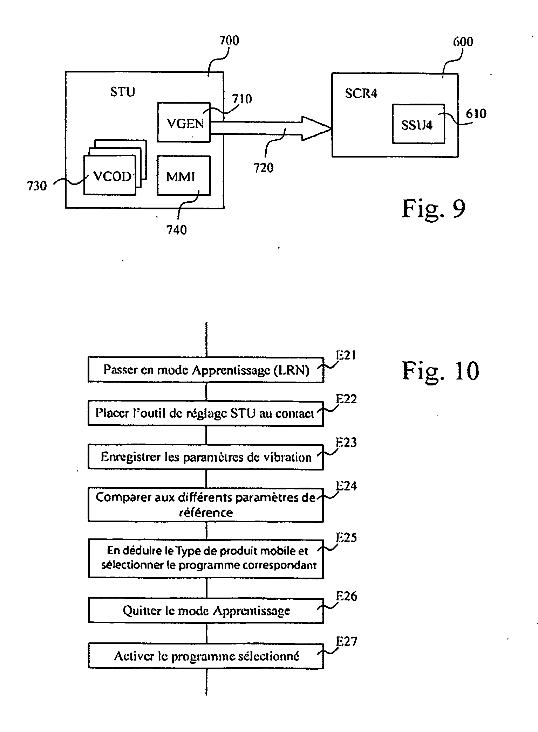

La figure 9 représente un outil de réglage permettant de mettre en oeuvre un deuxième mode de réalisation de l'invention.

Cet outil de réglage 700, également référencé STU, comprend en particulier un générateur de vibrations 710, également référencé VGEN, raccordé à un moyen de contact 720 représenté par une flèche pleine.

L'outil de réglage comprend en mémoire plusieurs codes de vibration 730, correspondant chacun à un type ou à une famille de produits du bâtiment, ces codes étant également référencés VCOD, et une interface homme-machine 740, telle qu'un clavier et un écran, également référencée MMI. L'interface homme-machine peut également contenir un lecteur optique de code-barres ou un lecteur électromagnétique d'étiquette électronique de type RFID.

Au moyen de l'interface MMI, il est possible de sélectionner un des codes de vibration et d'appliquer ce code au générateur de vibrations. De ce fait, le générateur de vibrations vibre selon ce code, par exemple avec une modulation de l'amplitude ou de la fréquence des vibrations.

La figure 9 représente également un quatrième produit du bâtiment ou écran 600 sur lequel a été disposé un quatrième capteur de sécurité 610, respectivement référencés SCR4 et SSU4. Dans la disposition de la figure, le moyen de contact 720 est au contact du quatrième écran SCR4 et il y a donc transmission des vibrations à ce dernier, donc également transmission des vibrations au quatrième capteur de sécurité SSU4.

Selon l'identification de la famille de l'écran, faite visuellement par l'installateur et indiquée ensuite sur le clavier ou alternativement directement lue sur une étiquette code-barres ou sur une étiquette électronique, un code particulier de vibrations est transmis au capteur de sécurité.

Par vibrations, il faut entendre également choc, chocs ou variations de pression.

La figure 10 décrit le procédé de fonctionnement du capteur 410 selon le deuxième mode de réalisation de l'invention. Ce deuxième mode ne diffère du premier que par la deuxième étape E22 et la troisième étape E23, toutes les autres étapes de même chiffre d'unités étant identiques deux à deux.

Dans la deuxième étape E22, l'outil de réglage STU est initialisé par l'installateur au moyen de l'interface MMI et disposé au contact de l'écran ou alternativement disposé directement au contact du capteur de sécurité.

Les vibrations sont émises soit de manière permanente, le code étant périodiquement répété, soit de manière unique suite à un appui sur un des boutons de l'interface MMI.

Dans la troisième étape E23, les paramètres de vibration mesurés MES sont enregistrés.

L'outil de réglage peut avantageusement être utilisé dès la première étape pour provoquer le passage en mode apprentissage. Auquel cas, les étapes E21 et E22 sont simplement permutées.

## Revendications

1. Procédé de configuration d'un capteur (10) à accéléromètre (11) destiné à équiper des produits du bâtiment (SCR1, SCR2, SCR3) de différents types, **caractérisé en ce qu'**il comprend les étapes suivantes :
- montage du capteur sur un produit du bâtiment,
- enregistrement de signaux délivrés par l'accéléromètre,
- analyse de l'enregistrement,
- détermination du type du produit du bâtiment grâce au résultat de l'étape d'analyse.

2. Procédé de configuration selon la revendication précédente, **caractérisé en ce qu'**il comprend une étape complémentaire d'activation d'un programme de fonctionnement du capteur, spécifique au type déterminé du produit du bâtiment équipé du capteur.

3. Procédé de configuration selon l'une des revendications précédentes, **caractérisé en ce que** l'étape d'enregistrement est déclenchée par l'un au moins des évènements suivants :
- commencement d'alimentation du capteur,
- mise en place d'une pile d'alimentation (14) dans le capteur,
- mise en place d'un boîtier du capteur sur un support du capteur,
- séquence particulière de chocs appliqués au capteur.

4. Procédé de configuration selon l'une des revendications précédentes, **caractérisé en ce que** l'étape d'enregistrement a lieu pendant une mise en mouvement du produit du bâtiment sur lequel est monté le capteur.

5. Procédé de configuration selon l'une des revendications précédentes, **caractérisé en ce que**, pendant l'étape d'analyse, la reconnaissance d'un mouvement de rotation conduit à déterminer que le produit du bâtiment est d'un premier type.

6. Procédé de configuration selon l'une des revendications précédentes, **caractérisé en ce que**, pendant l'étape d'analyse, la reconnaissance d'un double mouvement de translation à vitesse sensiblement constante sur une partie déterminée de sa course conduit à déterminer que le produit du bâtiment est d'un deuxième type.

7. Procédé de configuration selon l'une des revendications précédentes, **caractérisé en ce que**, pendant l'étape d'analyse, la reconnaissance d'un mouvement de translation simple à vitesse sensiblement constante sur une partie déterminée de sa course conduit à déterminer que le produit du bâtiment est d'un troisième type.

8. Procédé de configuration selon l'une des revendications précédentes, **caractérisé en ce que**, pendant l'étape d'analyse, la reconnaissance d'une absence de mouvement conduit à déterminer que le produit du bâtiment est d'un quatrième type.

9. Procédé de configuration selon l'une des revendications précédentes, **caractérisé en ce que** la reconnaissance d'un mouvement ayant d'abord principalement une composante selon une première direction puis principalement une composante selon une deuxième direction, conduit à déterminer que le produit du bâtiment est d'un cinquième type.

10. Procédé de configuration selon l'une des revendications précédentes, **caractérisé en ce que**, pendant l'étape d'analyse, la direction des mouvements est déterminée relativement à la verticale du lieu et **en ce qu'**une information sur l'orientation du capteur par rapport à la verticale du lieu résulte de l'action du champ de gravitation sur le capteur.

11. Procédé de configuration selon l'une des revendications 1 à 3, **caractérisé en ce que** l'étape d'enregistrement a lieu pendant l'application de vibrations sur le produit du bâtiment, en particulier au moyen d'un outil de réglage (700) comprenant un générateur de vibrations (710).

12. Procédé de configuration selon la revendication précédente, **caractérisé en ce qu'**on applique des vibrations différentes sur le produit du bâtiment selon la famille du produit du bâtiment.

13. Capteur domotique (10) comprenant un accéléromètre (11) et des moyens matériels (12, 16, 17, 18, 19) et logiciels de mise en oeuvre du procédé de configuration selon l'une des revendications précédentes.

14. Capteur domotique selon la revendication précédente, **caractérisé en ce que** l'accéléromètre est fixé sur une masse suspendue (512) par l'intermédiaire d'une liaison rotule (514).

15. Outil de réglage (700) comprenant un générateur de vibrations (510) et des moyens matériels (720, 730, 740) et logiciels de mise en oeuvre du procédé de configuration selon la revendication 11 ou 12.

## Claims

1. Method for configuring a sensor (10) including an accelerometer (11) for equipping building products (SCR1, SCR2, SCR3) of different types, **characterised in that** it comprises the following steps:
- installation of the sensor at a building product,
- recording of the signals transmitted by the accelerometer,
- analysis of the record,
- determination of the type of the building product based on the analysis step.

2. Method for configuring according to the preceding claim, **characterised in that** it comprises a complementary step of activating an operating programme of the sensor that is specific for the type as determined of the building product that is equipped with the sensor.

3. Method for configuring according to one of the preceding claims, **characterised in that** the recording step is triggered by at least one of the following events:
- the begin of supplying power to the sensor,
- the insertion of a feeder battery (14) into the sensor,
- the placing of a sensor housing on a sensor support,
- the application of a particular shock sequence to the sensor.

4. Method for configuring according to one of the preceding claims, **characterised in that** the recording step is executed during setting into movement of the building product on which the sensor is mounted.

5. Method for configuring according to one of the preceding claims, **characterised in that** the recognition, during the analysis step, of a rotational movement leads to the determination that the building product belongs to a first type.

6. Method for configuring according to one of the preceding claims, **characterised in that** the recognition, during the analysis step, of a double translation movement at a substantially constant speed along a predetermined portion of its travel, leads to the determination that the building product belongs to a second type.

7. Method for configuring according to one of the preceding claims, **characterised in that** the recognition, during the analysis step, of a simple translation movement at a substantially constant speed along a predetermined portion of its travel, leads to the determination that the building product belongs to a third type.

8. Method for configuring according to one of the preceding claims, **characterised in that** the recognition of no movement during the analysis step, leads to the determination that the building product belongs to a fourth type.

9. Method for configuring according to one of the preceding claims, **characterised in that** the recognition of a movement having at first principally a component according to a first direction and thereafter principally a component according to a second direction, leads to the determination that the building product belongs to a fifth type.

10. Method for configuring according to one of the preceding claims, **characterised in that**, during the analysis step, the direction of the movements is determined with respect to the local vertical, and **in that** an information as to the orientation of the sensor with respect to the local vertical results from the action of the gravitational field on the sensor.

11. Method for configuring according to one of claims 1 to 3, **characterised in that** the recording step is executed during the application of vibrations on the building product, especially by means of an adjusting tool (700) containing a vibration generator (710).

12. Method for configuring according to the preceding claim, **characterised in that** different vibrations are applied to the building product according to the family of the building product.

13. Home automation sensor (10), including an accelerometer (11) and hardware means (12, 16, 17, 18, 19) as well as software for performing the configuration method according to one of the preceding claims.

14. Home automation sensor according to the preceding claim, **characterised in that** the accelerometer is fastened on a mass (512) suspended by the intermediate of a ball-and-socket connection (514).

15. Adjusting tool (700), including a vibration generator (510) and hardware means (720, 730, 740) as well as software for performing the configuration method according to claim 11 or 12.

## Patentansprüche

1. Verfahren zur Konfiguration eines Sensors (10) mit Beschleunigungsmesser (11) zur Ausstattung von verschiedenartigen Gebäudeprodukten (SCR1, SCR2, SCR3), **dadurch gekennzeichnet, dass** es die folgenden Schritte aufweist:
- Anbringen des Sensors auf einem Gebäudeprodukt,
- Speichern der Signale, die vom Beschleunigungsmesser abgegeben werden,
- Analyse der gespeicherten Daten,
- Bestimmung der Art des Gebäudeprodukts auf Grund des Analyseschrittes.

2. Verfahren zur Konfiguration nach vorstehendem Anspruch, **dadurch gekennzeichnet, dass** es als zusätzlichen Schritt die Aktivierung eines Programms zum Betrieb des Sensors enthält, welches auf die zuvor bestimmte Art des Gebäudeprodukts zugeschnitten ist, das mit dem Sensor ausgestattet ist.

3. Verfahren zur Konfiguration nach einem der vorstehenden Ansprüche, **dadurch gekennzeichnet, dass** der Schritt zum Speichern durch mindestens einen der folgenden Vorgänge ausgelöst wird:
- Beginn der Energiespeisung des Sensors,
- Einsetzen einer Speisebatterie (14) in den Sensor,
- Aufsetzen eines Gehäuses des Sensors auf einen Träger des Sensors,
- besondere Aufeinanderfolge von Stössen, die auf den Sensor einwirken.

4. Verfahren zur Konfiguration nach einem der vorstehenden Ansprüche, **dadurch gekennzeichnet, dass** der Schritt zum Speichern stattfindet, wenn das Gebäudeprodukt, auf welchem der Sensor angebracht ist, in Bewegung gesetzt wird.

5. Verfahren zur Konfiguration nach einem der vorstehenden Ansprüche, **dadurch gekennzeichnet, dass** die Ermittlung einer Rotationsbewegung im Verlaufe des Schrittes zur Analyse dazu führt, dass das Gebäudeprodukt als zu einer ersten Art gehörend bestimmt wird.

6. Verfahren zur Konfiguration nach einem der vorstehenden Ansprüche, **dadurch gekennzeichnet, dass** im Verlaufe des Schrittes zur Analyse die Ermittlung einer doppelten Translationsbewegung mit praktisch konstanter Geschwindigkeit auf einem bestimmten Teil des Verschiebungsweges dazu führt, dass das Gebäudeprodukt als zu einer zweiten Art gehörend bestimmt wird.

7. Verfahren zur Konfiguration nach einem der vorstehenden Ansprüche, **dadurch gekennzeichnet, dass** im Verlaufe des Schrittes zur Analyse die Ermittlung einer einfachen Translationsbewegung mit praktisch konstanter Geschwindigkeit auf einem bestimmten Teil des Verschiebungsweges dazu führt, dass das Gebäudeprodukt als zu einer dritten Art gehörend bestimmt wird.

8. Verfahren zur Konfiguration nach einem der vorstehenden Ansprüche, **dadurch gekennzeichnet, dass** die Ermittlung einer Abwesenheit von Bewegungen im Verlaufe des Schrittes zur Analyse dazu führt, dass das Gebäudeprodukt als zu einer vierten Art gehörend bestimmt wird.

9. Verfahren zur Konfiguration nach einem der vorstehenden Ansprüche, **dadurch gekennzeichnet, dass** die Ermittlung einer Bewegung, welche zunächst hauptsächlich aus einer Komponente in einer Richtung und anschliessend hauptsächlich aus einer Komponente in einer zweiten Richtung besteht, dazu führt, dass das Gebäudeprodukt als zu einer fünften Art gehörend bestimmt wird.

10. Verfahren zur Konfiguration nach einem der vorstehenden Ansprüche, **dadurch gekennzeichnet, dass** die Richtung der Bewegungen in Bezug auf die Vertikale des Ortes im Verlaufe des Schrittes zur Analyse bestimmt wird, und dass eine Information bezüglich der Orientierung des Sensors in Bezug auf die Vertikale des Ortes das Ergebnis der Einwirkung des Schwerefeldes auf den Sensor ist.

11. Verfahren zur Konfiguration nach einem der Ansprüche 1 bis 3, **dadurch gekennzeichnet, dass** der Schritt zum Speichern stattfindet, während man Vibrationen auf das Gebäudeprodukt einwirken lässt, insbesondere durch Verwendung eines Einstellwerkzeugs (700), welches einen Vibrationsgenerator (710) aufweist.

12. Verfahren zur Konfiguration nach vorstehendem Anspruch, **dadurch gekennzeichnet, dass** man je nach der Art des Gebäudeprodukts unterschiedliche Vibrationen auf das Gebäudeprodukt einwirken lässt.

13. Haustechnischer Sensor (10), mit einem Beschleunigungsmesser (11) und Hardwaremitteln (12, 16, 17, 18, 19) sowie Software zur Ausführung des Verfahrens zur Konfiguration nach einem der vorstehenden Ansprüche.

14. Haustechnischer Sensor nach vorstehendem Anspruch, **dadurch gekennzeichnet, dass** der Beschleunigungsmesser über eine Kugelgelenkverbindung (514) an einer aufgehängten Masse (512) befestigt ist.

15. Einstellwerkzeug (700), welches einen vibrationsgenerator (15) und Hardwaremittel (720, 730, 740) sowie Software zur Ausführung des Verfahrens zur Konfiguration nach Anspruch 11 oder 12 aufweist.
